# EUROPEAN PATENT SPECIFICATION

(11) **EP 0 857 590 B1**
(45) Date of publication and mention of the grant of the patent: **23.04.2003**
(21) Application number: 98102301.3
(22) Date of filing: 10.02.1998
(51) Int. Cl.: B60G 11/08, B60G 3/20, F16F 1/368

(54) **Unit for the flexible suspension of a pair of wheels from a motor vehicle chassis**
Einheit für die flexible Aufhängung eines Radpaares von einem Kraftfahrzeugchassis
Unité pour la suspension flexible d'une paire de roues du chassis d'un véhicule automobile

(30) Priority: 11.02.1997 IT TO970106
(43) Date of publication of application: 12.08.1998
(73) Proprietor: IVECO FIAT S.p.A., 10156 Torino (IT)
(72) Inventor: Dal Col, Vittorio, 10099 S. Mauro Torinese (IT); Santini, Franco, 25020 Flero (IT)
(74) Representative: Franzolin, Luigi

(56) References cited:
- EP-A- 0 563 810
- DE-A- 1 924 175
- DE-A- 2 321 878
- FR-A- 2 611 604
- GB-A- 972 121
- US-A- 4 422 666
- US-A- 4 813 704
- US-A- 4 895 350
- US-A- 5 016 861
- PATENT ABSTRACTS OF JAPAN vol. 095, no. 008, 29 September 1995 & JP 07 117429 A (MITSUBISHI MOTORS CORP), 9 May 1995,
- "LES NOUVEAUX UTILITAIRES MERCEDES-BENZ" REVUE TECHNIQUE DIESEL, vol. 32, no. 193, pages XX-XXIV, XP000517761
- "MITSUBISHI CANTER" AUTOMOTIVE ENGINEERING, vol. 102, no. 3, 1 March 1994, pages 32-33, XP000434843
- BASTOW, D.: "Car Suspension and Handling" 1987 , PENTECH PRESS , LONDON XP002040806 196110 * page 182 - page 183; figures 5.8A,5.8B *
- "Composites used in transverse spring layout" AUTOMOTIVE ENGINEER, vol. 11, no. 4, August 1986 - September 1986, GB, page 34 XP002040921

## Description

This invention relates to a unit for the flexible suspension of a pair of wheels from the chassis of a motor vehicle, particularly a commercial vehicle.

Existing units of the above type essentially comprise a load-bearing structure and a pair of arms at each side of the vehicle, lower and upper respectively, each of which is connected at one end to the stub axle of the relevant wheel and is hinged to the load-bearing structure at the other end so that it is able to swing about its axis in relation to the structure. The arms and the load bearing structure are normally connected by flexible elements such as air springs and anti-roll bars designed to change shape under the loads acting on the wheels while the vehicle is in motion and to provide the suspension unit with the necessary roll stiffness - and also elements to damp the oscillations of the flexible elements, such as fluid shock absorbers.

The lower and upper arms, flexible elements and damping elements are prefitted to the load-bearing structure, and with it make up a preassembled unit which can be then be bolted quickly and easily to the vehicle chassis. The cost of this solution is nevertheless relatively high, mainly due to the use of the air springs and anti-roll bar, and it requires the vehicle to be fitted with a circuit to supply the air springs.

In other existing suspension systems. the upper and lower arms are directly fastened to the vehicle chassis and the flexible elements consist of a leaf spring, which is cheaper and easier to fit than air springs, with its axis transverse to the vehicle's direction of motion and interposed between the chassis and relevant wheel mounting elements. This solution may also allow elimination of the anti-roll bar, because the leaf spring stiffness (known to increase when the spring assumes an 'S' shape) may be equal to the stiffness of an assembly made up of air springs and anti-roll bars.

Leaf spring stiffness is known to affect driving comfort, the stress to which suspension components are subject, potential vertical wheel travel and axle roll stiffness. In order to achieve a more effective compromise between these factors, the intrinsic frequency of the suspension unit must lie within a very narrow range: 1.3 Hz to 1.4 Hz in the case of commercial vehicles. This intrinsic frequency is known to be proportional to the vehicle's total train weight and the elastic properties of the leaf spring, which in turn depend on the fastenings, the geometry and the material out of which the spring is made.

Normally different leaf springs are fitted to vehicles with different total gross train weights to ensure that intrinsic suspension unit's oscillating frequency is within the said limit values in each case, and that the axis roll stiffness is optimal for the vehicle to which the suspension unit is fitted. This involves a need to stock small quantities of different types of leaf spring, which does not make for economies of scale.

A solution to this problem was proposed in US 4,422,666, which discloses a suspension mechanism for automotive vehicles as defined in the preamble of claim 1.

The aim of this invention is achieved by a unit for the flexible suspension of a pair of wheels from a motor vehicle chassis, as claimed in claim 1.

For a better understanding of this invention, there follows a preferred manner of implementation, which is intended purely as a guide and is not restrictive, which refers to the attached drawings in which:
- figure 1 is a partial perspective view of a unit for the flexible suspension of a pair of wheels from a vehicle chassis produced in accordance with this invention;
- figure 2 is an enlarged scale front view, in partial cross-section, of part of the unit in figure 1;
- figure 3 is an enlarged scale front view of a detail of figure 2;
- figure 4 is a cross-section through the IV-IV line in figure 3;
- figure 5 is an enlarged side view in partial cross-section of another part of the unit in figure 1, with parts removed for greater clarity
- figure 6 is a view from above, in partial cross-section and on a enlarged scale, of another part of the unit in figure 1
- figure 7 is a cross-section through the line VII-VII in figure 6; and
- figure 8 is an exploded view of a detail of figure 5 seen from above.

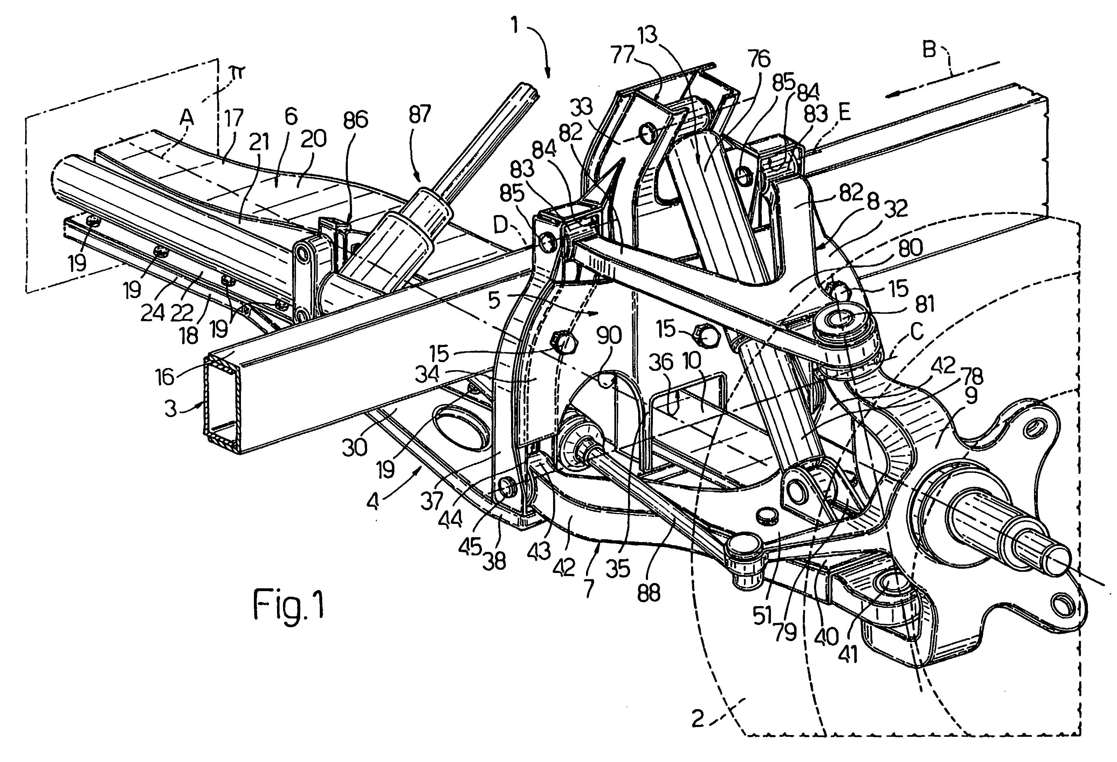

Figure 1 partially illustrates an overall unit, marked 1, for the flexible suspension of a pair of steerable wheels 2 (only one of which is shown schematically) from a chassis 3 (shown only in part) of a motor vehicle; an commercial vehicle in the case in point.

In particular, unit 1 is symmetrical about a median longitudinal plane π through the motor vehicle and figure 1 therefore shows only parts of unit 1 associated with one side of the motor vehicle for greater simplicity.

Unit 1 includes an essentially U-shaped load bearing structure 4 comprising a pair of side panels 5 and a lower base 6 which extends transversally in relation to the vehicle's direction of motion, with its opposite ends integral with the side panels 5.

Unit 1 also includes, at each side of the vehicle, one pair of lower and upper swinging arms 7, 8 respectively, fastened at one end to stub axle 9 acting as a support for wheel 2 and hinged at the other end to side panel 5.

Unit 1 also includes a leaf spring 10 with its A axis transverse to the vehicle's direction of motion, which comprises a single leaf arranged passing through base 6 and fastened to base 6 itself and to arms 7. To allow it to damp the oscillations of spring 10 while the vehicle is in motion, unit 1 is equipped with a pair of fluid shock absorbers 13 of known type, each of which is interposed between the associated side panel 5 and arm 7 and extends obliquely in relation to them.

Load bearing structure 4, arms 7,8, spring 10 and shock absorbers 13 make up a preassembled unit designed to be fastened by means of several bolts 15 to the relevant side members 16 of the chassis 3 and extend in a longitudinal direction B in relation to the vehicle's direction of motion. In particular, bolts 15 connect each side panel 5 to its respective side member 16 to form an integral unit.

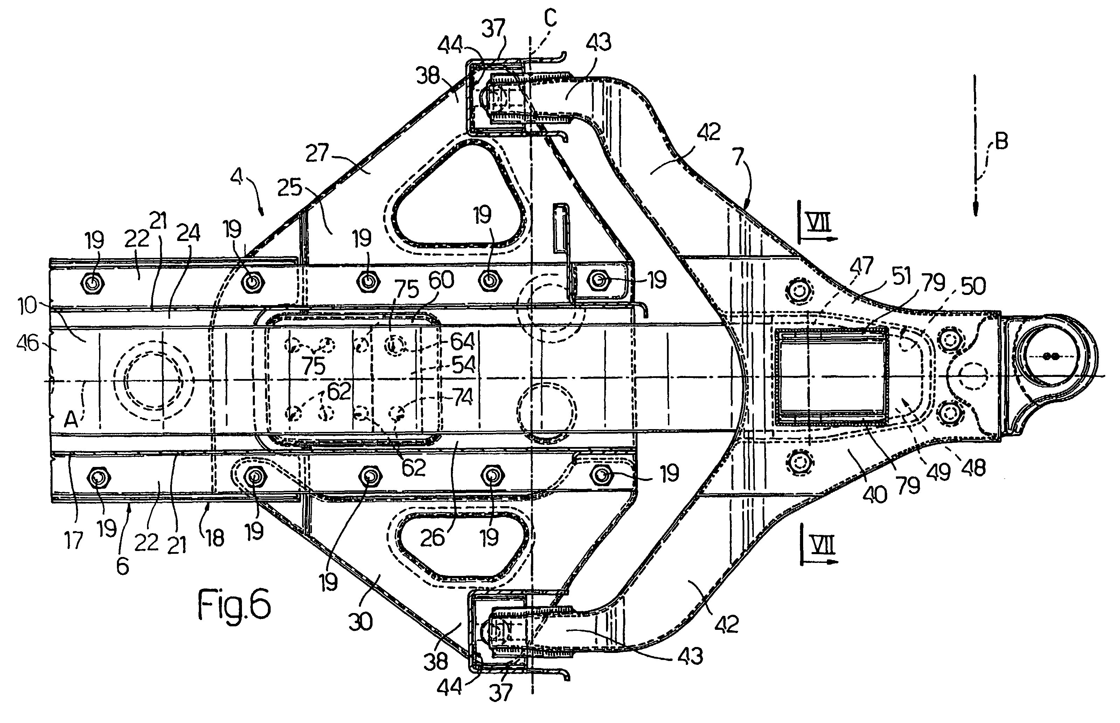

With reference to figures 1, 2, 5, 6 and 7, base 6 consists of an essentially quadrangular box-sectioned structure and includes an omega-profiled main element 17 with a lower opening 14 and an element 18 closing off element 14 and fastened by means of several bolts 19 to element 17 and serving the purpose of stiffening the base 6 and protecting the spring 10.

In particular, element 17 includes an upper wall 20 opposite opening 14, a pair of essentially flat wings 21 parallel to one another, which are fitted respectively with their edges 22 folded at right angles in opposite directions to one another and fastened to element 18 by means of bolts 19. Wall 20 also contains a pair of recesses 23, whose function will be explained later, located close to the side panels 5.

Element 18 includes an essentially rectangular, flat intermediate beam 24 and a pair of profiled plates 25 welded to the opposite ends of beam 24, each possessing an essentially rectangular portion 26 extending beam 24 and an essentially triangular tab 27 protruding laterally in relation to element 17. Element 18 also contains two straight lines of holes used for bolts 19 for connection to the edges 22 of element 17.

Each row of holes extends partly along the relevant longitudinal edge of beam 24 and partly along plates 25 on the extension of the said longitudinal edge.

Element 18 also includes a second pair of tabs 30 essentially symmetrical with tabs 27 about the axis A and each connected to a plate 25 by the opposite side strip of tab 27 by means of two of the bolts 19 connecting element 18 to element 17. Element 18 also contains a pair of recesses 31, whose function will be explained later, each aligned with an associated recess 23 in wall 20 of element 17.

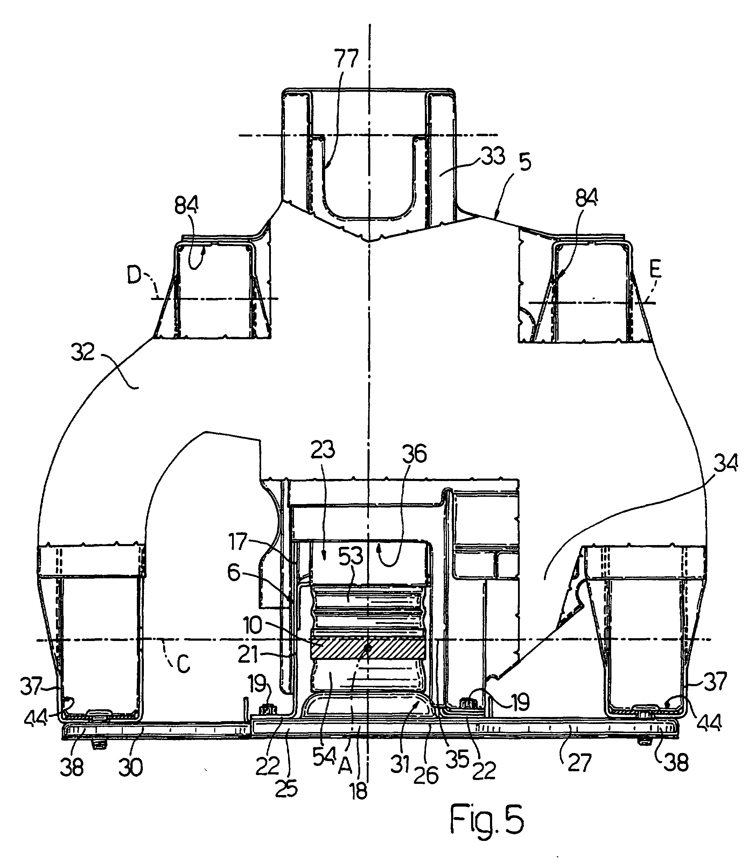

With particular reference to figures 1 and 5, each side panel 5 comprises a box-sectioned structure and includes an essentially flat intermediate portion 32 connected by bolts 15 to the side member 16, an upper appendix 33 protruding from side member 16 and tilted toward stub axle 9 in relation to portion 32, and a lower portion 34 with one intermediate section 35 essentially in the same plane as portion 32 and provided with a central U-shaped opening 36, from the side edges of which extends wall 20 and wings 21 of element 17. Portion 34 of each side panel 5 also has two lateral protrusions 37 curved toward the π plane in relation to section 35 and each fastened by means of a bolt and lock nut to portion 38 of the free tip of the relevant wing 27, 30.

With particular reference to figures 1, 6 and 8, each arm 7 protruding from side panel 5 in the opposite direction to base 6, is essentially V-shaped and may be considered a two-dimensional structure because its vertical dimensions are negligible compared to its longitudinal and lateral dimensions.

In particular, each arm 7 includes a tip portion 40 with one end attached by means of ball joint 41 to stub axle 9 of the relevant wheel 2, and a pair of branches 42 extending from portion 40 with free end portions 43 hinged to side panel 5 about a longitudinal axis C in relation to the vehicle's direction of motion In this way, arms 7 are able to swing about their respective axes C while the vehicle is in motion. More specifically, portions 43 of branches 42 are essentially tubular in shape and are housed in corresponding attachment seats 44 formed from the protrusions 37 of side panel 5 and are fastened by pins 45 of the axis C, each fastened to opposing side panels delimiting seat 44.

With reference to the attached figures, spring 10 includes an intermediate portion 46 arranged inside base 6 and fastened to the base and to opposite end portions 47 protruding from base 6 through the openings 36 in panel 5 and fastened to seats 48 in portions 40 of the arms 7.

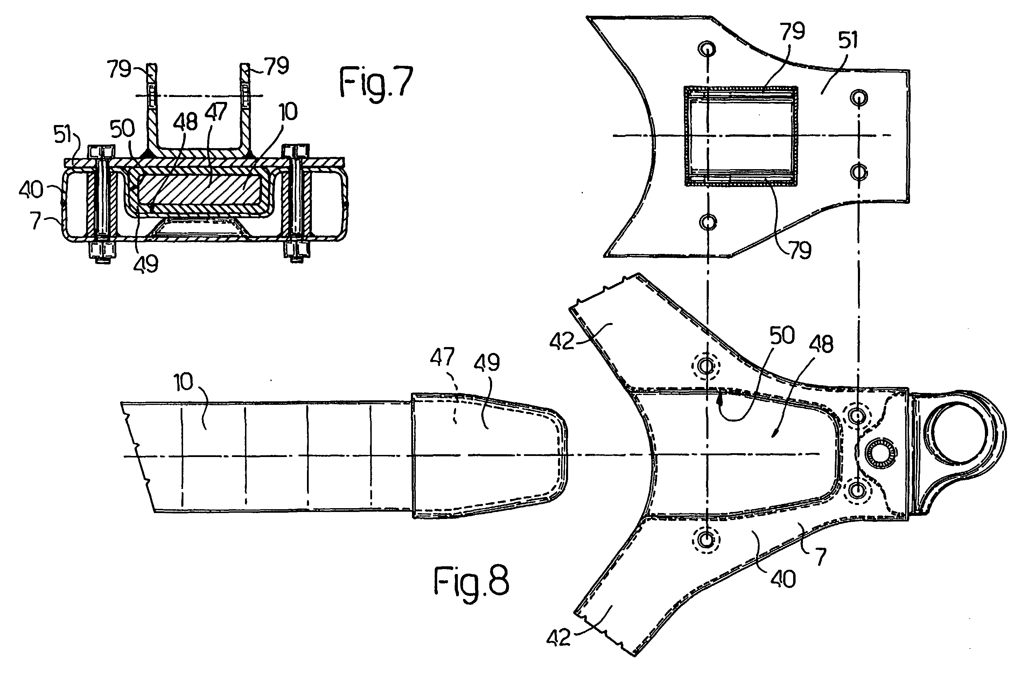

More specifically, portions 47 of spring 10 are tapered and are housed by means of the interposition of rubber caps 49 in the seats 48 (figure 8), shaped to complement portions 47, each of which contains an upper opening 50 closed by a cover 51 and fastened to portion 40 of arm 7 by means of several bolts.

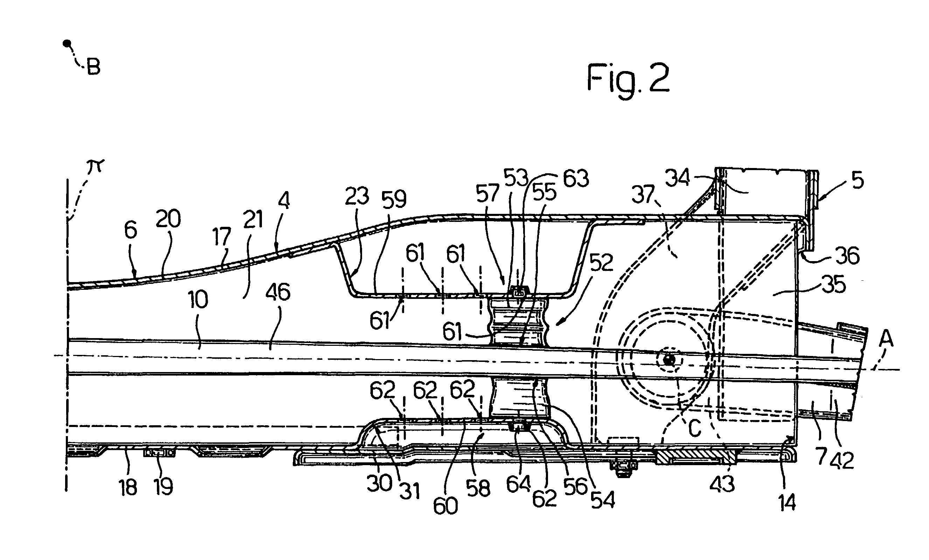

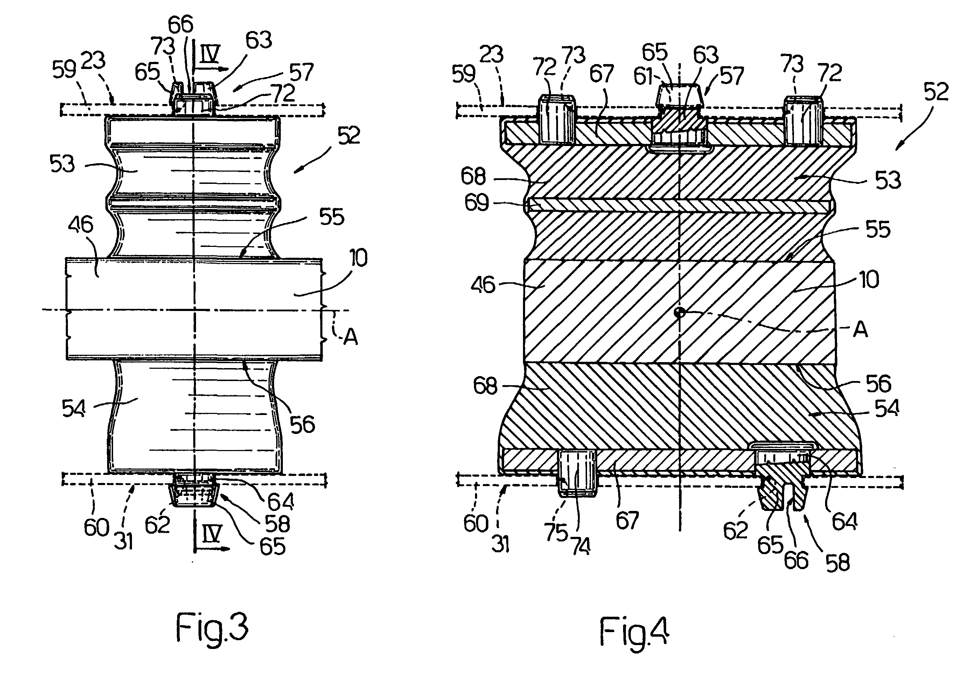

According to one important feature of this invention, unit 1 includes a pair of components 52 (figures 2, 3 and 4) designed to attach portion 46 of spring 10 to base 6, which arranged as mounting blocks in opposition to the vehicle centre line, and thus plane π. These may be positioned in adjustable manner along the axis A to alter the elastic properties of spring 10 and adapt it to the vehicle's total train weight during installation.

With reference to figures 2, 3, 4 and 6, each component 52 is arranged to correspond with associated recesses 23, 31 in wall 20 and element 18 of base 6, and includes a pair of upper and lower flexible blocks 53, 54 respectively, which co-operate transversely with upper and lower opposite surfaces, 55, 56 respectively, of spring 10 and adjustable connectors 57, 58 to fasten each block 53, 54 to a wall 59, 60 at the back of the associated recess 23, 31 in one of several pre-established fastening positions along axis A.

More specifically, elements 57, 58 for connecting each block 53, 54 to wall 59, 60 include several equidistant through holes 61, 62 in the wall 59, 60 and a pin 63, 64 protruding from block 53, 54 with an essentially conical head 65 made out of plastic material, which tapers off towards its free end and is designed to be press fitted into one of the said holes 61, 62.

More specifically, each head 65 is equipped with a longitudinal groove 66 which allows it to contract elastically when inserted into hole 61, 62 and to expand after passing through the wall 59, 60.

Holes 61, 62 in each wall 59, 60 therefore define the possible positions for fastening block 53, 54 to base 6 along axis A.

Each block 53, 54 consists essentially of a first layer of metal 67, fitted against the wall 61, 62 when in use, and a second layer or rubber 68 which is thicker than layer 67 and positioned in contact with spring 10 when in use.

Blocks 53, 54 are subject to stresses of varying intensities when in use. More specifically, blocks 53 are subjected to higher loads than blocks 54.

For this reason, blocks 53 are equipped with a metal plate 69 embedded in rubber layer 68, whose job is to stiffen blocks 53. Continual contact between blocks 53, 54 and spring 10 is therefore ensured under all operating conditions.

Rotational locks are interposed between each wall 59, 60 and blocks 53, 54 in order to prevent blocks 53, 54 from rotating about the relevant pin 63, 64 when the vehicle is in motion.

More specifically, the rotational locks associated with each block 53 include a pair of metal pins 72 which protrude from layer 67 of block 53, arranged as lateral strips opposite pin 63, aligned with pin 63 in direction B and engaged during use with two corresponding seats of a number of pairs of seats 73 in wall 59, each pair being associated with its respective hole 61.

Because each block 54 is subject to less stress, the rotational locks comprise a metal pin 74 which protrudes from layer 67 of block 54, aligned with pin 64 in direction B and engaged during use in one of several through seats 75 in wall 60, each associated with its respective hole 62.

With reference to figure 1, each shock absorber 13 includes an external sleeve 76 with its upper edge hinged in attachment seat 77 in appendix 33 of the relative side panel 5 and a rod 78 designed to slide inside sleeve 76, which has its lower free end hinged to a pair of tabs 79 protruding from cover 49 of arm 7.

Still referring to figure 1, each essentially V-shaped arm 8 protrudes from panel 5 and is located above arm 7. Like arms 7, they may be considered a two-dimensional structure because their vertical dimension is negligible compared to their longitudinal and lateral dimensions.

More specifically, each arm 8 includes a tip portion 80 fastened by means of ball joint 81 to stub axle 9 of wheel 2, and a pair of branches 82 which extend from portion 80, arranged as lateral strips opposite shock absorber 13 and with free end portions 83 hinged to panel 5 about the axes D and E parallel to the axis C and slightly offset from one another.

The offset between the axes D and E is designed not to create any obstacle to the oscillation of arms 8 in relation to the chassis 3, and to bring about a known stabilising effect on the vehicle during braking.

More specifically, branches 82 of each arm 8 taper off towards portions 83, each of which consists of a cylindrical sleeve hinged to a corresponding attachment seat 84 in portion 32 of the relative panel 5.

More specifically, each portion 83 is held in place by pin 85 in axis D, E, fastened to opposite side panels delimiting seat 84.

Due to the type of fasteners connecting the arms 8 to the panels 5 and stub axles 9, and due to the fact that spring 10 and shock absorbers 13 are attached to the arms 7, the stresses acting on arms 8 in a transverse direction to their largest dimensions are minimised.

Each arm 8 is therefore made by pressing to form an essentially open structure with a C profile and relatively low overall weight.

As may be seen from figure 1, base 6 is provided with conventional attachments 86 close to tabs 30 to support a known unit 87, which is used to control the steering of wheels 2. In particular, unit 87 is operated by the vehicle's steering wheel (not shown) and controls a pair of steering arms 88 attached to the stub axles 9 of wheels 2 and arranged to pass through U-shaped openings, each formed between a protrusion 37 and section 35 of portion 34 of panel 5. The fact that the tabs 30 of plates 25 of element 18 are removable allows easy access to the attachments 86 of unit 87, which may therefore be removed, when necessary, without releasing the entire unit 1 from the side members 16.

Unit 1 is assembled as follows.

Initially, the blocks 53, 54 are fitted in the required fastening positions on element 17 and element 18 respectively, considered separately. In particular, the head 65 of pin 63, 64 of each block 53, 54 is inserted into the pre-selected hole 61, 62 in wall 59, 60 until it finally clicks into place in the wall 59, 60.

At this point, after attaching arms 7 to panels 5 and stub axles 9, spring 10 is inserted into the element 17 and portion 46 is positioned so that it rests on blocks 53. Portions 47 are inserted into the seats 48 of arms 7, which are then closed at the top by covers 51.

Element 18 is then attached to element 17 by means of bolts 19 while blocks 54 are brought into contact with spring 10 on the opposite side of the respective blocks 53.

Lastly, arms 8 are fastened to panels 5 and stub axles 9, while the shock absorbers 13 are each hinged between appendix 33 of panel 5 and the tabs 79 of arm 7.

The operation of unit 1 is known and will not therefore be described.

The advantages offered by unit 1 produced as described in this invention are evident from an examination of its features.

In particular, unit 1 can be quickly and easily fitted to the vehicle chassis and its cost is relatively low because it allows the use of leaf springs without the drawbacks mentioned previously.

In fact, because the position of fasteners 52 may be adjusted along axis A, the elastic properties of leaf spring 10 may be adjusted to adapt it to the total train weight of the vehicle to which it is fitted. In particular, fasteners 52 may be adjusted to alter the vertical axle stiffness and the axle roll stiffness simultaneously. Experimental tests carried out on the suspension units described show that when fasteners 52 are moved along the axis A, the resulting percentage increase in roll stiffness is greater than the percentage change in vertical stiffness.

To conclude, the same leaf spring may be fitted to vehicles of different total train weights, while keeping the intrinsic frequency of oscillation within the aforementioned limit values and simultaneously achieving advantageous economies of scale.

It is evident that unit 1 may be subject to modifications and variants that are still protected by the claims.

In particular, branches 82 of each arm 8 could be hinged to the relative panel 5 about a common fixed axis.

## Claims

1. Preassembled unit (1) for the flexible suspension of a pair of wheels (2) from a vehicle chassis (3) comprising:
- a load-bearing structure (4);
- a lower arm (7) and an upper arm (8), for each side of the vehicle, attached to mounting elements (9) of the relative wheel (2) and oscillating in relation to said load-bearing structure (4) about a first fixed axis (C) and about at least one other fixed axis (D, E), respectively;
- a leaf spring (10) having an axis (A) transverse to the vehicle's direction of motion, interposed between said mounting elements (9) of said wheels (2) and said load-bearing structure (4) and designed to change shape when loads are acting on the wheels (2); and
- damping means (13) to damp the oscillations of said leaf spring (10);
- at least one pair of fasteners (52) connecting said leaf spring (10) to said load-bearing structure (4), arranged as mounting blocks in opposition to the vehicle's centre-line, and adapted to be positioned in adjustable manner along the axis (A) of said leaf spring (10) in order to alter the elastic properties of the leaf spring (10) itself and adapt it to vehicle's total train weight during installation, each of said fasteners (52) including an upper block (53) and a lower block (54), which co-operate transversely with opposite surfaces (55, 56) of said leaf spring (10);
**characterized in that** said blocks (53, 54) are flexible, and that said upper blocks (53) are stiffer than said lower blocks (54).

2. Unit as claimed in claim 1, **characterized in that** each of said fasteners (52) includes adjustable connectors (57, 58) for fixing each of said blocks (53, 54) to a wall (59, 60) of said load-bearing structure (4) in one of several pre-established attachment positions along the axis (A) of said leaf spring (10).

3. Unit as claimed in claim 2, **characterized in that** said connectors (57, 58) of each block (53, 54) to the relative said wall (59, 60) include several first engagement elements (61, 62) supported by said wall (59, 60), and defining said attachment positions, and a second engagement element (63, 64) supported by said block (53, 54) and able to couple with one of said first engagement elements (61, 62).

4. Unit as claimed in claim 3, **characterized in that** said first engagement elements associated with each of said blocks (53, 54) consist of several through holes (61, 62) in said wall (59, 60), and **in that** each of said second engagement elements consists of a pin (63, 64) protruding from the block (53, 54) designed to be press fitted into one of said corresponding holes (61, 62).

5. Unit as claimed in claim 4, **characterized by** including rotational locks (72, 73, 74, 75) interposed between each of said blocks (53, 54) and the relative said wall (59, 60) and designed to prevent said block (53, 54) from rotating about the relative pin (63, 64) while the vehicle is in motion.

6. Unit as claimed in any one of the foregoing claims, **characterized in that** said load-bearing structure (4) is essentially U-shaped and includes a pair of side panels (5), each provided with hinges for said lower and upper arms (7,8), and a lower base (6) which extends transversely in relation to the vehicle's direction of motion and having opposite ends solidly fixed to said panels (5), said leaf spring (10) presenting an intermediate portion (46) connected to said base (6) by means of said fasteners (52) and opposite end portions (47) attached to the respective lower arms (7).

7. Unit as claimed in claim 6, **characterized in that** each of said lower arms (7) is provided with a seat (48) engaging with an associated said end portion (47) of said leaf spring (10) and presenting a lower opening (5) closed by a relative cover (51) fixed to the body of said lower arm (7) in such a way that it may be released.

8. Unit as claimed in claim 6 or 7, **characterized in that** said base (6) has a box-sectioned structure with the leaf spring (10) passing through it.

9. Unit as claimed in claim 8, **characterized in that** said base (6) comprises a main element (17) with a Ω-shaped profile, having a lower opening (14) and a cover (18) designed to close said lower opening (14) and attached by several bolts (19) to said main element (17), said main element (17) and said cover element (18) presenting respective pairs of recesses (23, 31), each delimited by a wall (59, 60) connected to a relative said block (53, 54).

## Patentansprüche

1. Vormontierte Einheit (1) für die flexible Aufhängung eines Radpaares (2) von einem Kraftfahrzeugchassis (3), umfassend:
- eine Last tragende Struktur (4);
- einen unteren Arm (7) und einen oberen Arm (8), für jede Seite des Fahrzeugs, die an Montageelementen (9) des jeweiligen Rads (2) angebracht sind und in bezug auf die Last tragende Struktur (4) um jeweils eine erste feste Achse (C) und um mindestens eine andere feste Achse (D, E) oszillieren;
- eine Blattfeder (10) mit einer Achse (A) quer zu der Bewegungsrichtung des Fahrzeugs, die zwischen den Montageelementen (9) der Räder (2) und der Last tragenden Struktur (4) liegt und beim Wirken von Lasten auf die Räder (2) die Gestalt ändern kann; und
- eine Dämpfungseinrichtung (13), um die Oszillationen der Blattfeder (10) zu dämpfen;
- mindestens ein Paar von Befestigungsmitteln (52), die die Blattfeder (10) mit der Last tragenden Struktur (4) verbinden, die als Montageblöcke gegenüber der Mittellinie dies Fahrzeugs angeordnet sind und in justierbarer Weise entlang der Achse (A) der Blattfeder (10) positioniert werden können, um die elastischen Eigenschaften der Blattfeder (10) selbst zu ändern und sie an das Gesamtradwerkgewicht des Fahrzeugs während der Installation anzupassen, wobei jedes der Befestigungsmittel (52) einen oberen Block (53) und einen unteren Block (54) umfasst, die schräg mit gegenüberliegenden Flächen (55, 56) der Blattfeder (10) zusammenwirken;
**dadurch gekennzeichnet, dass** die Blöcke (53, 54) flexibel sind und die oberen Blöcke (53) steifer als die unteren Blöcke (54) sind.

2. Einheit nach Anspruch 1, **dadurch gekennzeichnet, dass** jedes der Befestigungsmittel (52) justierbare Verbinder (57, 58) zum Befestigen jedes der Blöcke (53, 54) an einer Wand (59, 60) der Last tragenden Struktur (4) in einer von mehreren im voraus festgelegten Befestigungspositionen entlang der Achse (A) der Blattfeder (10) umfasst.

3. Einheit nach Anspruch 2, **dadurch gekennzeichnet, dass** die Verbinder (57, 58) jedes Blocks (53, 54) mit der jeweiligen Wand (59, 60) mehrere erste Eingriffselemente (61, 62) umfassen, die durch die Wand (59, 60) gestützt werden, und die Befestigungspositionen definieren, und ein zweites Eingriffselement (63, 64) umfassen, das durch den Block (53, 54) gestützt wird und mit einem der ersten Eingriffselemente (61, 62) verbindbar ist.

4. Einheit nach Anspruch 3, **dadurch gekennzeichnet, dass** die ersten Eingriffselemente, die zu jedem der Blöcke. (53, 54) gehören, aus mehreren Durchgangslöchern (61, 62) in der Wand (59, 60) bestehen, und dass jedes der zweiten Eingriffselemente aus einem Stift (63, 64) besteht, der aus dem Block (53, 54) vorsteht, der in eines der entsprechenden Löcher (61, 62) mit Presspassung einpassbar gestaltet ist.

5. Einheit nach Anspruch 4, **dadurch gekennzeichnet, dass** sie Rotationsarretierungen (72, 73, 74, 75) umfasst, die zwischen jedem der Blöcke (53, 54) und der jeweiligen Wand (59, 60) vorgesehen sind und verhindern, dass der Block (53, 54) sich um den jeweiligen Stift (63, 64) dreht, während sich das Fahrzeug bewegt.

6. Einheit nach einem der vorhergehenden Ansprüche, **dadurch gekennzeichnet, dass** die Last tragende Struktur (4) im wesentlichen U-förmig ist und ein Paar von Seitenwänden (5), die jeweils mit Gelenken für den unteren und oberen Arm (7, 8) versehen sind, und eine untere Basis (6) umfasst, die sich quer in bezug auf die Bewegungsrichtung des Fahrzeugs erstreckt und gegenüberliegende Enden aufweist, die fest an den Wänden (5) befestigt sind, wobei die Blattfeder (10) einen Zwischenbereich (46) darstellt, der mit der Basis (6) durch die Befestigungsmittel (52) verbunden ist und gegenüberliegende Endbereiche (47) an den jeweiligen unteren Armen (7) angebracht sind.

7. Einheit nach Anspruch 6, **dadurch gekennzeichnet, dass** jeder der unteren Arme (7) mit einem Sitz (48) versehen ist, der in Eingriff mit einem zugehörigen Endbereich (47) der Blattfeder (10) ist und eine untere Öffnung (5) darstellt, die durch eine jeweilige Abdeckung (51) geschlossen ist, die an dem Körper des unteren Arms (7) so befestigt ist, dass sie freigegeben werden kann.

8. Einheit nach Anspruch 6 oder 7, **dadurch gekennzeichnet, dass** die Basis (6) eine Struktur mit kastenförmigem Querschnitt aufweist, wobei die Blattfeder (10) durch sie führt.

9. Einheit nach Anspruch 8, **dadurch gekennzeichnet, dass** die Basis (6) ein Hauptelement (17) umfasst, das ein Ω-förmiges Profil aufweist, mit einer unteren Öffnung (14) und einer Abdeckung (18), die zum Schließen der unteren Öffnung (14) gestaltet ist und durch mehrere Bolzen (19) an dem Hauptelement (17) angebracht ist, wobei das Hauptelement (17) und das Abdeckelement (18) jeweilige Paare von Aussparungen (23, 31) bilden, die jeweils durch eine Wand (59, 60) begrenzt sind, die mit einem jeweiligen Block (53, 54) verbunden ist.

## Revendications

1. Unité pré-assemblée (1) pour la suspension flexible d'une paire de roues (2) du châssis (3) d'un véhicule, comprenant :
- une structure de support de charge (4) ;
- un bras inférieur (7) et un bras supérieur (8), pour chaque côté du véhicule, attachés à des éléments de montage (9) de la roue (2) afférente et oscillant en relation avec ladite structure de support de charge (4), autour d'un premier axe (C) fixé et autour d'au moins un autre axe (D, E) fixé, respectivement ;
- un ressort à lame (10), ayant un axe (A) transversal par rapport à la direction de déplacement du véhicule, interposé entre ledit élément de montage (9) desdites roues (2) et ladite structure de support de charge (4) et conçu pour changer de forme lorsque des charges agissent sur les roues (2) ; et
- des moyens d'amortissement (13) pour amortir les oscillations dudit ressort à lame (10) ;
- au moins une paire d'éléments de fixation (52) reliant ledit ressort à lame (10) à ladite structure de support de charge (4), agencés sous forme de blocs de montage en opposition à l'axe médian du véhicule et adaptés pour être positionnés de manière ajustable le long de l'axe (A) dudit ressort à lame (10), de manière à modifier les propriétés élastiques du ressort à lame (10) lui-même, et de l'adapter au poids de train total du véhicule durant l'installation, chacun desdits éléments de fixation (52) comprenant un bloc supérieur (53) et un bloc inférieur (54), qui coopèrent transversalement avec des surfaces (55, 56) opposées dudit ressort à lame (10) ;
**caractérisée en ce que** lesdits blocs (53, 54) sont flexibles et **en ce que** lesdits blocs supérieurs (53) sont plus rigides que lesdits blocs inférieurs (54).

2. Unité selon la revendication 1, **caractérisée en ce que** chacun desdits éléments de fixation (52) comprend des raccords (57, 58) ajustables pour la fixation de chacun desdits blocs (53, 54) à une paroi (59, 60) de ladite structure de support de charge (4) dans l'une d'une pluralité de positions de fixation préétablies, le long de l'axe (A) dudit ressort à lame (10).

3. Unité selon la revendication 2, **caractérisée en ce que** lesdits raccords (57, 58), de chaque bloc (53, 54) à ladite paroi (59, 60) afférente, comprennent une pluralité de premiers éléments de mise en prise (61, 62) supportés par ladite paroi (59, 60) et définissant lesdites positions de fixation, et un deuxième élément de mise en prise (63, 64) supporté par ledit bloc (53, 54) et en mesure de s'accoupler à l'un desdits premiers éléments de mise en prise (61, 62).

4. Unité selon la revendication 3, **caractérisée en ce que** lesdits premiers éléments de mise en prise, associés à chacun desdits blocs (53, 54), sont formés d'une pluralité de trous traversants (61, 62) ménagés dans ladite paroi (59, 60), et **en ce que** chacun desdits deuxièmes éléments de mise en prise est formé d'une tige (63, 64) faisant saillie du bloc (53, 54), conçue pour être montée avec un ajustage serré dans l'un desdits trous (61, 62) correspondant.

5. Unité selon la revendication 4, **caractérisée par** le fait d'inclure des verrous de rotation (72, 73, 74, 75), interposés entre chacun desdits blocs (53, 54) et ladite paroi (59, 60) afférente, et conçus pour empêcher lesdits blocs (53, 54) de tourner autour de la tige (63, 64) afférente, quand le véhicule est en déplacement.

6. Unité selon l'une quelconque des revendications précédentes, **caractérisée en ce que** ladite structure support de charge (4) est sensiblement en forme de U et comprend une paire de panneaux latéraux (5), chacun muni de charnières pour lesdits bras inférieurs et supérieurs (7, 8), et d'une base inférieure (6) qui s'étend transversalement par rapport à la direction de déplacement du véhicule et comportant des extrémités opposées fixées solidement auxdits panneaux (5), ledit ressort à lame (10) présentant une partie intermédiaire (46) reliée à ladite base (6) à l'aide desdits éléments de fixation (52), et des parties d'extrémité (47) opposées fixées aux bras inférieurs (7) respectifs.

7. Unité selon la revendication 6, **caractérisée en ce que** chacun desdits bras inférieurs (7) est muni d'un siège (48) mis en prise avec une dite partie d'extrémité (47) associée dudit ressort à lame (10) et présentant une ouverture inférieure (5) fermée par un couvercle (51) afférent, fixé au corps dudit bras inférieur (7), de manière qu'il puisse être démonté.

8. Unité selon la revendication 6 ou 7, **caractérisée en ce que** ladite base (6) présente une structure à section transversale en caisson, le ressort à lame (10) passant à travers elle.

9. Unité selon la revendication 8, **caractérisée en ce que** ladite base (6) comprend un élément principal (17) ayant un profil en forme de Ω, ayant une ouverture inférieure (14) et un couvercle (18), conçu pour fermer ladite ouverture inférieure (14) et fixé, par une pluralité de boulons (9), audit élément principal (17), ledit élément principal (17) et ledit élément formant couvercle (18) présentant des paires respectives de cavités (23, 31), chacune délimitée par une paroi (59, 60) reliée aux dits blocs (53, 54) afférents.
